# EUROPEAN PATENT APPLICATION

(11) **EP 1 818 162 A2**
(43) Date of publication of application: **15.08.2007**
(21) Application number: 07101791.7
(22) Date of filing: 06.02.2007
(51) Int. Cl.: B29C 69/00, B29C 49/04

(54) **Process for producing open plastic containers by extrusion and blow moulding**

(30) Priority: 14.02.2006 IT MI20060266
(71) Applicant: Chiari, Gino, 42043 Gattatico (RE) (IT); Chiari, Edo, 42043 Gattatico (RE) (IT)
(72) Inventor: Chiari, Gino, 42043 Gattatico (RE) (IT); Chiari, Edo, 42043 Gattatico (RE) (IT)
(74) Representative: Giambrocono, Alfonso

(57) **Abstract**

The process enables open plastic containers (12, 14; 112) to be produced by extrusion and blow moulding, and comprises: a first step in which closed intermediate containers (10; 110) are formed comprising a first part (12; 112) representing the open container to be obtained, and a second part (14, 16; 118; 116) for completing the intermediate container (10; 110); and a second step in which the second part (14, 16; 118; 116) of the intermediate container (10; 110) is separated to obtain the required open container (12; 112). The second part of the intermediate container (10; 110) can comprise a second open container (14) or the lid (118) for the first container (112).

## Description

The present invention relates to a process for producing open plastic containers by extrusion and blow moulding.

Open plastic containers (for example a tub or a tray) are conventionally produced by injection moulding a suitable plastic material. Injection moulding also enables multi-layer containers to be produced, but with a maximum of three layers. In particular, this enables containers to be obtained in which, for example, the innermost layer of the container can be of small thickness and of a plastic material of the type suitable for contact with food, while the intermediate layer is of recovered plastic, hence obtaining considerable saving.

However for particular uses containers composed of more than three layers must be used, which can only be obtained by an extrusion and blow moulding process, used particularly to produce bottles, which leave the mould in which blow moulding has taken place ready to be filled and then closed by applying a stopper.

Neither the open containers produced by injection moulding nor those produced by extrusion and blow moulding (which, as stated, are open when they leave the blow mould) are normally filled directly by the container producer, but are fed to the packager who fills them and seals them by closing their aperture in conventional manner with a stopper or lid. However during the period between the container manufacture and its filling there is an established risk that the container inner walls may be contaminated (mere exposure to air is sufficient), so that during that period those containers just produced must be enclosed in packs which prevent their contamination (in particular for containers intended to contain food), with the costs that this implies.

An object of the present invention is to provide a process for producing open containers also formed of more than three layers if required, which although using conventional extrusion and blow moulding machines, enables a product to be obtained which is not subject to contamination prior to filling, hence does not require special protection.

Another object is to provide a process of the aforesaid type which, although using conventional extrusion and blow moulding machines, enables decidedly greater production to be obtained that that of conventional processes of this type.

The first stated object is achieved by the process of the present invention, characterised by comprising:
- a first step in which closed intermediate containers are formed comprising a first part, representing the open container to be obtained, and a second part for completing said intermediate container; and
- a second step in which said second part of the intermediate container is separated to obtain the required open container.

If the inner surface of the open container to be filled must be sterile, said separation is effected just prior to the container filling operation, if necessary in a sterile environment. If this requirement does not exist, the separation can be effected beforehand, for example immediately after producing the intermediate container.

To implement the aforedescribed process, means for separating the open container from the second part of the closed intermediate container are required, in addition to conventional extrusion and blow moulding machines. Cutting blades, preferably of rotary type, are conveniently used for this purpose.

The second stated object is attained according to the present invention in that said second part of the intermediate container comprises a second open container, which can be identical to or different from the first container.

This enables production to be considerably increased, although using the same extrusion and blow moulding machines used in known processes, this result being achieved by simply providing blow moulds which enable said closed intermediate containers to be obtained. In particular, if said first and second container are identical, by using the same extrusion and blow moulding machines, the process of the invention enables the production of such containers to be exactly doubled, it being merely necessary to provide additional means for separating the two containers and any scrap.

It should also be noted that if said second part of the intermediate container comprises or constitutes a lid for closing the container which forms the first part thereof, both the required container and the relative lid are obtained by said separation.

The invention will be more apparent from the ensuing description of the manner in which the required final containers are obtained by the process of the invention. In this description reference is made to the accompanying drawings, in which:
Figure 1 is a coaxial section through a closed intermediate container obtainable at the end of the first step in the process of the invention, from which intermediate container two identical tubs are obtained at the end of the second and final step of this process;
Figure 2 is a coaxial section through a second closed intermediate container, which enables a tub with relative lid to be obtained;
Figure 3 is a very schematic view of a blow mould usable with conventional extrusion and blow moulding machines, which enables lidded containers such as those of Figure 2 to be produced;
Figure 4 is a very schematic view of a blow mould usable with conventional extrusion and blow moulding machines, which enables closed intermediate containers such as those of Figure 1 to be produced.

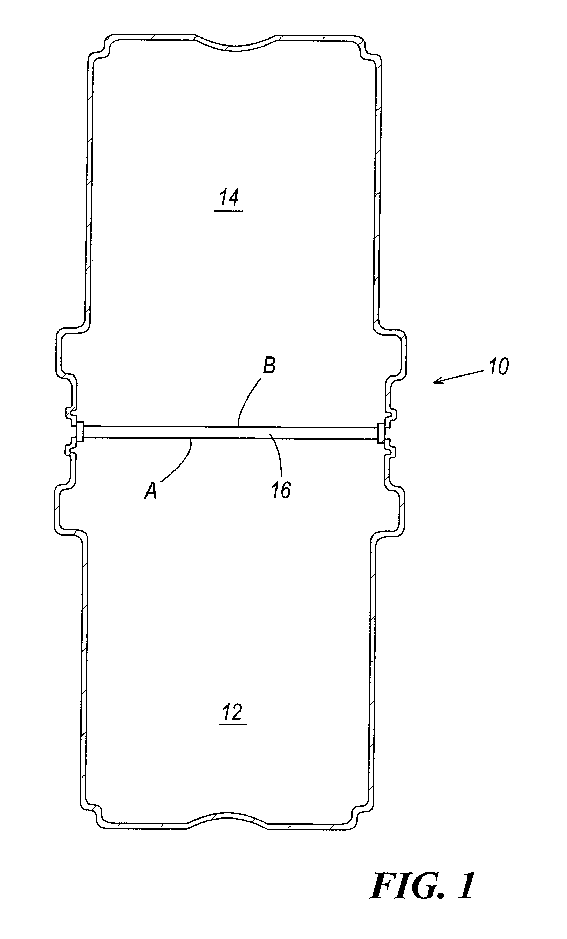

As already stated, the process of the invention uses conventional extrusion and blow moulding machines by which, using a suitable blow mould, the said closed intermediate container can be obtained, for example that shown in Figure 1 and indicated by 10. The manner in which such a blow mould is to be constructed is well known to an expert of the art.

Having obtained the closed intermediate container 10 by implementing the first step of the process of the invention, it will be apparent that a cut need merely to be made along the lines A and B to separate the two required tubs 12 and 14, in addition to an intermediate scrap spacer ring 16. This scrap could also be avoided by essentially reducing to zero the height of the ring 16 and making a single cut. However, for practical reasons it has been normally found advantageous to provide it.

As stated, the cut along the lines A and B is made by blades, preferably of rotary type.
As already stated, the final step of the process of the invention, i.e. said cutting operation, can also be effected a considerable time after producing the closed container 10 (in particular just prior to filling the tubs 12, 14), so that their inner walls remain sterile until the moment of use.

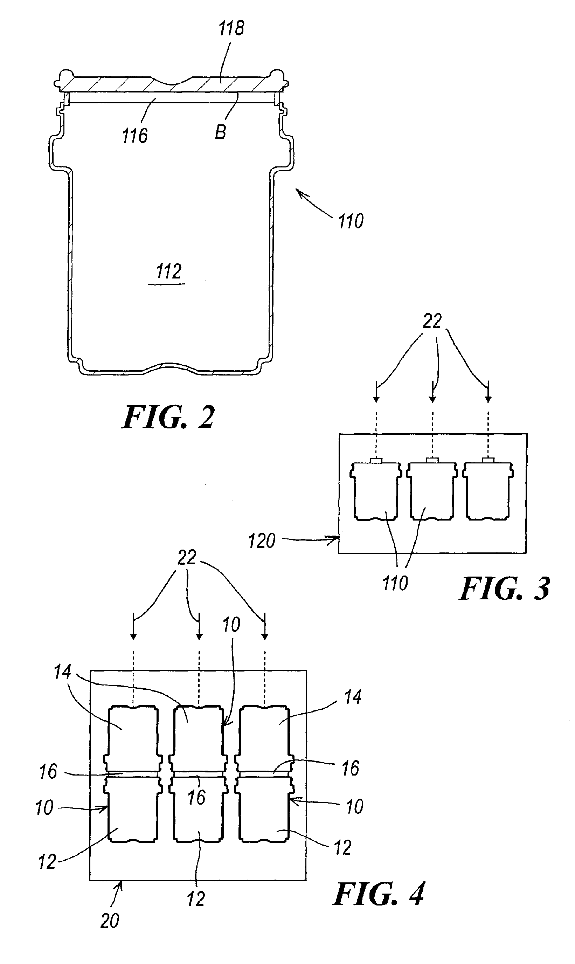

The lids for closing the tubs 12, 14 can be produced separately, for example by injection moulding. However they can also be produced directly by the process of the present invention. In this respect a mould 120 such as that shown in Figure 3 can be used to obtain three closed intermediate containers such as that of Figure 2, indicated by 110, a first part 112 of which forms the required tub and the remaining part comprises its lid 118, usable (inverted with respect to Figure 2) when it has been separated from the scrap 116. As can be seen in Figure 2, separation again takes place by means of two cuts A and B for practical reasons, although again in this case a single cut could be made, so eliminating the scrap 116.

Returning to Figure 3, the arrows 22 schematically indicate the three extrusion ports of a conventional extrusion and blow moulding machine (the rest of which is not shown as it is of conventional type).

From Figure 1 it will be apparent that with the process of the present invention, although using conventional extrusion and blow moulding machines, the tub production can be doubled by simply using a blow mould suitable for obtaining said closed intermediate container 10. With a conventional extrusion and blow moulding machine and using a mould such as that shown schematically in Figure 4 and indicated by 20, fed by the same extrusion ports 22, the three closed intermediate containers 10 can be obtained, from each of which, by means of two cuts, two open containers 12 and 14 and a scrap portion 16 can be obtained, for a total of six open containers, so essentially doubling the machine production.

As already stated, as the process of the present invention uses extrusion and blow moulding machines, open mouthed containers can be obtained the walls of which are formed from more than three layers, this not being possible using injection moulding processes.

It should also be noted that if it is not necessary to prevent internal contamination of the containers and if these are of suitable shape, after said separation (cutting) step they can be stacked one in another, in the manner of those obtainable by injection moulding.

## Claims

1. A process for producing open plastic containers (12, 14; 112) by extrusion and blow moulding, **characterised by** comprising:
- a first step in which closed intermediate containers (10; 110) are formed comprising a first part (12; 112) representing the open container to be obtained, and a second part (14, 16; 118, 116) for completing the intermediate container (10; 110); and
- a second step in which the second part (14, 16; 118, 116) of the intermediate container (10; 110) is separated to obtain the required open container (12; 112).

2. A process as claimed in claim 1, wherein the second part (14, 16; 118, 116) of the closed intermediate container (10; 110) comprises a second open container (14) or a lid (118) for the first open container (112).

3. A process as claimed in claim 2, wherein the closed intermediate container (10; 110) also comprises a scrap connection element (16; 116), in addition to the first open container (12; 112) and the second open container (14) or the lid (118) for the first container.

4. A process as claimed in claim 1, wherein blades are used to effect the separation.

5. A process as claimed in claim 4, wherein the blades are of rotary type.
